# EUROPEAN PATENT SPECIFICATION

(11) **EP 1 423 743 B1**
(45) Date of publication and mention of the grant of the patent: **23.11.2005**
(21) Application number: 02767616.2
(22) Date of filing: 02.09.2002
(51) Int. Cl.: G02B 6/44

(54) **TUBE ASSEMBLY FOR INSTALLATION INTO A DUCT**
ROHRANORDNUNG ZUR INSTALLATION IN EINEM SCHUTZKANAL
ASSEMBLAGE DE TUBES S'INSTALLANT DANS UNE CONDUITE

(30) Priority: 05.09.2001 GB 0121458
(43) Date of publication of application: 02.06.2004
(73) Proprietor: Emtelle UK Limited, Hawick TD9 8LF (GB)
(72) Inventor: BROWN, George Henry Platt, Galashiels TD1 1RQ (GB); STOCKTON, David John, Suffolk IP12 1RX (GB)
(74) Representative: Vinsome, Rex Martin
(86) International application number: PCT/GB2002/004015
(87) International publication number: WO 2003/021324

(56) References cited:
- EP-A- 0 382 144
- EP-A- 0 425 979
- EP-A- 0 833 177
- GB-A- 2 156 837
- US-A- 4 740 053
- US-A- 6 101 304
- US-A1- 2001 000 139

## Description

The present invention relates to tube assemblies for installation into a duct, and relates particularly, but not exclusively to tube assemblies for carrying optical fibre cables for installation into underground ducts.

Many communications network operators have installed ducts of relatively small diameter (generally known to persons skilled in the art as "sub-ducts") directly into the ground or into larger, main ducts. These sub-ducts are usually made of high density polyethylene and typically are of size 50/40 mm, 40/33 mm, 32/28 mm and 25/20 mm (i.e. outside diameter/inside diameter). Also, many older ducts are of size 50/40 mm and 40/ 33 mm.

It has been desirable to sub divide these ducts by installing smaller tubes, either as a bundle of tubes encapsulated in a sheath or as several individual tubes. The disadvantage with the first of these methods is that encapsulating the tubes as a bundle produces an item which is relatively stiff. This problem is made worse by the fact that it is desirable for the encapsulating sheath to be manufactured from a material with a relatively low coefficient of friction. It is well known to persons skilled in the art that such low friction materials are manufactured primarily from high density polyethylene, and it is a good general rule that the higher the density the lower the friction. It is also a good general rule that the higher the density the stiffer the material. The problem of encapsulating the tubes producing a stiffer product is therefore aggravated by the additional stiffness resulting from the high density, low coefficient of friction jacket. As a result, such assemblies will not blow very far, particularly in tortuous routes. The need to divide sub ducts exists primarily in metropolitan areas, so routes involve many road crossings and therefore many bends.

An attempt to overcome this problem has been made by blowing individual tubes. The tubes themselves are much more flexible that the assembly. However, this process suffers from the drawback that it is relatively complicated. It is necessary to have multiple drums on site holding the individual tubes. The installation of tubes by blowing is in fact achieved by a combination of pushing and blowing. The pushing device is usually a caterpillar device which exerts a degree of pressure on the tubes being pushed. The individual tubes are not protected by a sheath and are relatively small and fragile. It is therefore necessary to internally pressurise the individual tubes so that they do not collapse under the pressure of the caterpillar pushing device. Despite this, the tubes are still damaged on occasion during the installation process, making subsequent placement of fibre optic cable into the individual tubes unreliable.

Preferred embodiments of the present invention seek to overcome the above disadvantages of the prior art.

According to the present invention, there is provided a tube assembly for installation into a duct, the assembly comprising:
at least one hollow flexible tube;
a first layer enclosing the or each said flexible tube and having a flexural modulus of less than 400 Megapascals (Mpa); and
a lubricating layer surrounding said first layer;
characterised in that at least one said hollow flexible tube is adapted to have at least one respective flexible signal transmitting member installed therein subsequently to installation of the assembly into a duct.

By providing a first layer having the flexibility set out above and a lubricating layer surrounding the first layer, this provides the advantage of simultaneously avoiding the problems encountered in blowing stiffer/lower friction (such as high density polyethylene) and more flexble/higher friction (such as medium density polyethylene) materials around curves, while having a coefficient of friction comparable with material such as high density polyethylene. This solution also avoids the need to internally pressurise the tubes and provides a protective sheath against the compressive forces of the caterpillar pushing device. In particular, low friction materials such as high density polyethylene, while encountering less frictional resistance against the wall of the sub-duct during blowing, are stiffer than higher friction materials, as a result of which difficulty is encountered in blowing tubes of the material around curves. Higher friction materials are more flexible and therefore encounter less difficulty in passing around curves, but encounter more frictional resistance to blowing.

The assembly of the present invention can be blown surprisingly far and rapidly in comparison with the arrangements of the prior art. Furthermore, there is a strong prejudice in the relevant art against attempting to blow several tubes simultaneously, blowing of each tube separately being considered the only method possible. The present invention therefore has the advantage that installation rates are significantly greater than in prior art arrangements.

The first layer may have a flexural modulus of less than 350 Megapascals (Mpa).

At least one said hollow tube may be formed from polyethylene.

In a preferred embodiment, said first layer is formed from polyethylene.

The first layer may be substantially circular in external cross-section.

The first layer may be substantially polygonal in external cross-section.

The first layer may have a thickness of between 0.5mm and 3mm.

At least one said hollow tube may be adapted to receive at least one optical fibre.

The lubricating layer may include an organic silicone material.

The organic silicone material may be a slip agent.

The lubricating layer may include an antistatic material.

The antistatic material may be an amine based material.

The assembly is preferably free of ductile materials.

By providing an assembly free of ductile materials, this provides the advantage of avoiding the use of materials which will plastically deform during installation or when wrapped around a storage drum, and which would thus cause a kink in the assembly which would obstruct installation.

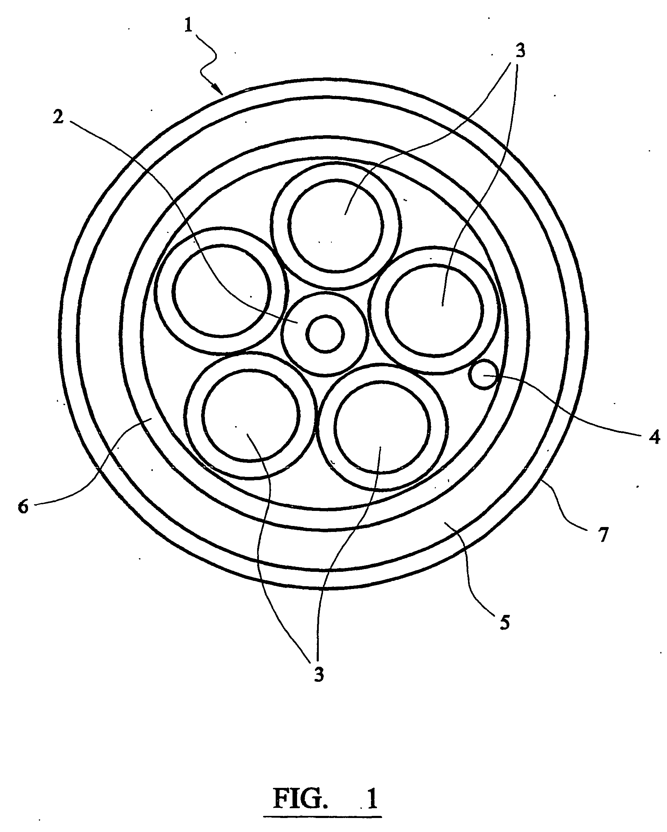

A preferred embodiment of the above invention will now be described, by way of example only and not in any limitative sense, with reference to the accompanying drawing in which:-
Figure 1 is a schematic cross-sectional illustration of an optical fibre cable embodying the invention.

Referring to Figure 1, a tube assembly 1 (such as high density polyethylene) comprises a dummy tube 2 of 7mm external diameter formed from extrudedmedium density polyethylene and five primary tubes 3 of 10mm external diameter and 8mm internal diameter, also formed from extruded medium density polyethylene, and placed around the dummy tube 2. The medium density polyethylene used to form the dummy tube 2 and primary tubes 3 is typically in the density range 0.927 to 0.94 g per cm³, and the primary tubes 3 are also provided with a co-extruded fining (not shown) on the internal surface thereof to minimise static attraction and friction between the tubes 3 and optical fibre units (not shown) subsequently installed into the tubes 3. The tubes 2,3 and a rip cord 4, for subsequently removing the covering layers of the assembly to gain access to the tubes 2, 3, are surrounded by an outer sheath 5 formed from extruded medium density polyethylene of density 0.939g per cm³, for example available from BP Chemicals Limited, whose registered address is Britannic House, 1 Finsbury Circus, London EC2M 7BA, United Kingdom, as grade number V20D760S. The outer sheath 5, which has a thickness of between 0.5mm and 3mm is provided with a non-metallic water barrier 6, and is surrounded by a lubricant polymer layer 7 containing a polyethylene based lubricated compound, the active constituent of the lubricant being an organic silicone slip agent.

The cable assembly 1 of Figure 1 has unexpectedly been found to be installable over significantly greater distance by blowing than the separate tubes of the prior art.

### Example

A cable assembly differing from that of Figure 1 only in that the water barrier 6 has been removed was blown into a 50/40.8 mm ribbed duct by means of a compressed air blowing machine of a type which will be familiar to persons skilled in the art. The results of the blowing operation were as follows

| Time (minutes) | Hydraulic Pressure | Air Pressure |
|---|---|---|
| 0.0 | 45 Bar | 6 Bar |
| 2.0 | 50 Bar | 7 Bar |
| 4.0 | 50 Bar | 7.5 Bar |
| 6.0 | 60 Bar | 8 Bar |
| 8.0 | 70 Bar | 8.5 Bar |
| 10.0 | 60 Bar | 8.5 Bar |
| 10.56 | Cable out | |

It was found that the cable travelled a total distance of 940 metres in 10 minutes 56 seconds, representing an average installation speed of 85 metres per minute.

### Comparative Example

A similar blowing test was carried out on an assembly which differed from the assembly 1 of Figure 1 in that the lubricant layer 7 was absent, an aluminium foil was present as the water barrier 6, and the medium density polyethylene outer sheath 5 was applied more loosely than in the case of assembly 1 of Figure 1. Such a product is known for the purpose of being pulled into duct, but is not suitable for being blown into a duct by means of compressed air.

The results of the tests were as follows

| Distance (m) | Speed | Hydraulic Pressure | Air Pressure |
|---|---|---|---|
| 226 | 40m per min | 100 Bar | 8 Bar |
| 354 | 55m per min | 100 Bar | 8 Bar |
| 510 | 40m per min | 100 Bar | 8 Bar |
| 622 | 35m per min | 110 Bar | 8 Bar |
| 716 | 35m per min | 110 Bar | 8 Bar |

The cable stopped after a distance of 760 m as a result of the installation apparatus slipping on the outer sheath, and then stopped again at 870 m.

It can therefore be seen that the present invention can be installed with significantly higher blowing speeds and over significantly greater distances than in the case of the prior art.

It will be appreciated by persons skilled in the art that the above invention has been described by way of example only and not in any limitative sense, and that various alterations and modifications are possible without departure from the scope of the invention as defined by the appended claims.

## Claims

1. A tube assembly for installation into a duct, the assembly comprising:
at least one hollow flexible tube;
a first layer enclosing the or each said flexible tube and having a flexural modulus ofless than 400 Megapascals (Mpa); and
a lubricating layer surrounding said first layer;
**characterised in that** at least one said hollow flexible tube is adapted to have at least one respective flexible signal transmitting member installed therein subsequently to installation of the assembly into a duct.

2. An assembly according to claim 1, wherein said first layer has a flexural modulus of less than 350 Megapascals (Mpa).

3. An assembly according to claim 1 or 2, wherein at least one said hollow tube is formed from polyethylene.

4. An assembly according to any one of the preceding claims, wherein said first layer is formed from polyethylene.

5. An assembly according to any one of the preceding claims, wherein the first layer is substantially circular in external cross-section.

6. An assembly according to any one of claims 1 to 4, wherein the first layer is substantially polygonal in external cross-section.

7. An assembly according to any one of the preceding claims, wherein the first layer has a thickness of between 0.5mm and 3mm.

8. An assembly according to any one of the preceding claims, wherein at least one said hollow tube is adapted to receive at least one optical fibre.

9. An assembly according to any one of the preceding claims, wherein the lubricating layer includes an organic silicone material.

10. An assembly according to claim 9, wherein the organic silicone material is a slip agent.

11. An assembly according to any one of the preceding claims, wherein the lubricating layer includes an antistatic material.

12. An assembly according to claim 11, wherein the antistatic material is an amine based material.

13. An assembly according to any one of the preceding claims, wherein the assembly is free of ductile materials.

## Patentansprüche

1. Rohranordnung zur Installation in einer Führung, wobei die Anordnung umfasst:
mindestens ein hohles flexibles Rohr;
eine erste Schicht, die das oder die flexiblen Rohre umschließt und ein Biegemodul von weniger als 400 Megapascal (Mpa) aufweist; und
eine Schmierschicht, die die erste Schicht umschließt;
**dadurch gekennzeichnet, dass** mindestens ein hohles flexibles Rohr daran angepasst ist, dass mindestens ein entsprechendes flexibles Signalübertragungselement anschließend an die Installation der Anordnung in einer Führung darin installiert wird.

2. Anordnung gemäß Anspruch 1, wobei die erste Schicht ein Biegemodul von weniger als 350 Megapascal (Mpa) aufweist.

3. Anordnung gemäß Anspruch 1 oder 2, wobei mindestens ein hohles Rohr aus Polyethylen geformt ist.

4. Anordnung gemäß einem der vorhergehenden Ansprüche, wobei die erste Schicht aus Polyethylen geformt ist.

5. Anordnung gemäß einem der vorhergehenden Ansprüche, wobei die erste Schicht am äußeren Durchmesser im Wesentlichen kreisförmig ist.

6. Anordnung gemäß einem der Ansprüche 1 bis 4, wobei die erste Schicht am äußeren Querschnitt im Wesentlichen polygonal ist.

7. Anordnung gemäß einem der vorhergehenden Ansprüche, wobei die erste Schicht eine Dicke zwischen 0,5 mm und 3 mm aufweist.

8. Anordnung gemäß einem der vorhergehenden Ansprüche, wobei mindestens ein hohles Rohr angepasst ist, mindestens eine optische Faser aufzunehmen.

9. Anordnung gemäß einem der vorhergehenden Ansprüche, wobei die Schmierschicht ein organisches Silikonmaterial einschließt.

10. Anordnung gemäß Anspruch 9, wobei das organische Silikonmaterial ein Gleitmittel ist.

11. Anordnung gemäß einem der vorhergehenden Ansprüche, wobei die Schmierschicht ein antistatisches Material einschließt.

12. Anordnung gemäß Anspruch 11, wobei das antistatische Material ein Material auf Aminbasis ist.

13. Anordnung gemäß einem der vorhergehenden Ansprüche, wobei die Anordnung frei von plastischen Materialien ist.

## Revendications

1. Assemblage de tubes pour une installation dans une conduite, l'assemblage comprenant :
au moins un tube flexible creux ;
une première couche enfermant le ou chaque dit tube flexible et ayant un module de flexion inférieur à 400 Mégapascals (MPa) ; et
une couche lubrifiante entourant ladite première couche ;
**caractérisé en ce qu'**au moins un dit tube flexible creux est adapté pour qu'au moins un organe transmetteur de signal flexible respectif y soit installé ultérieurement à l'installation de l'assemblage dans une conduite.

2. Assemblage selon la revendication 1, dans lequel ladite première couche a un module de flexion inférieur à 350 Mégapascals (MPa).

3. Assemblage selon la revendication 1 ou 2, dans lequel au moins un dit tube creux est formé de polyéthylène.

4. Assemblage selon l'une quelconque des revendications précédentes, dans lequel ladite première couche est formée de polyéthylène,

5. Assemblage selon l'une quelconque des revendications précédentes, dans lequel la première couche est sensiblement circulaire en section transversale externe.

6. Assemblage selon l'une quelconque des revendications 1 à 4, dans lequel la première couche est sensiblement polygonale en section transversale externe.

7. Assemblage selon l'une quelconque des revendications précédentes, dans lequel la première couche a une épaisseur comprise entre 0,5 mm et 3 mm.

8. Assemblage selon l'une quelconque des revendications précédentes, dans lequel au moins un dit tube creux est adapté pour recevoir au moins une fibre optique.

9. Assemblage selon l'une quelconque des revendications précédentes, dans lequel la couche lubrifiante comprend un matériau de silicone organique.

10. Assemblage selon la revendication 9, dans lequel le matériau de silicone organique est un agent de glissement.

11. Assemblage selon l'une quelconque des revendications précédentes, dans lequel la couche lubrifiante comprend un matériau antistatique.

12. Assemblage selon la revendication 11, dans lequel le matériau antistatique est un matériau à base d'amine.

13. Assemblage selon l'une quelconque des revendications précédentes, dans lequel l'assemblage est dépourvu de matériaux ductiles.
